# EUROPEAN PATENT APPLICATION

(11) **EP 4 790 809 A1**
(43) Date of publication of application: **12.08.2026**
(21) Application number: 25156362.3
(22) Date of filing: 06.02.2025
(51) Int. Cl.: H01M 50/244, H01M 50/249, H01M 50/296, H01M 50/583

(54) **ENERGY STORAGE SYSTEM WITH INTEGRATED BATTERY DISCONNECT UNIT**

(71) Applicant: Volvo Truck Corporation, 405 08 Göteborg (SE)
(72) Inventor: ROUT, Dhirendra, 422 54 GÖTEBORG (SE); IRANNEZHAD, Mike, 413 30 GÖTEBORG (SE); JONSSON, Kasper, 417 57 GÖTEBORG (SE); TOTH, Attila, 421 41 VÄSTRA FRÖLUNDA (SE)
(74) Representative: Kransell & Wennborg KB

(57) **Abstract**

An energy storage system (100) comprising: a housing (102) configured to accommodate at least one battery module (104); a mounting plate (106) including at least one battery disconnect unit (108a-b) configured to be connected to the at least one battery module; and a sliding mechanism (110a-b) configured to allow the mounting plate to slide into and out of the housing through a mounting opening (112) arranged to receive the mounting plate.

## Description

### TECHNICAL FIELD

The disclosure relates generally to energy storage systems for vehicles. In particular aspects, the disclosure relates to an energy storage system comprising a battery housing allowing easy installation and removal of a battery disconnect unit. The disclosure can be applied to heavy-duty vehicles, such as trucks, buses, and construction equipment, among other vehicle types. The disclosure can also be applied to marine vessels and the like. Although the disclosure may be described with respect to a particular vehicle, the disclosure is not restricted to any particular vehicle.

### BACKGROUND

Rechargeable battery systems, such as lithium-ion batteries, are widely used in applications ranging from portable electronics to electric vehicles due to their high energy density and efficiency. Under certain conditions, these systems may experience thermal runaway, a phenomenon in which a rapid temperature increase within a cell results in the release of high-temperature gases and particles. This occurrence poses safety concerns, as uncontrolled gas release can lead to fire or damage to surrounding components.

Existing battery housings often include venting channels or systems to manage gas evacuation during such events. However, challenges remain in designing systems that can efficiently direct gas flow while addressing risks associated with high-temperature gas and particle release. Solutions that effectively balance safety and performance are critical for enhancing the reliability of battery systems in demanding applications.

### SUMMARY

According to a first aspect of the disclosure, it is provided an energy storage system comprising: a housing configured to accommodate at least one battery module; a mounting plate including at least one battery disconnect unit configured to be connected to the at least one battery module; and a sliding mechanism configured to allow the mounting plate to slide into and out of the housing through a mounting opening arranged to receive the mounting plate.

A technical benefit may include facilitating the assembly and servicing of the energy storage system by allowing the mounting plate, which holds the at least one battery disconnect unit, to slide into and out of the housing. This sliding mechanism simplifies the alignment of electrical connections between the battery disconnect unit and the battery module, reducing the risk of misalignment and connection errors. Additionally, the use of a mounting opening simplifies access to internal components, improving the ease and efficiency of maintenance operations while minimizing system downtime.

Optionally, in some examples, including in at least one preferred example, the sliding mechanism is configured to guide the mounting plate into the housing so that a connection point of the at least one battery disconnect unit is aligned with a corresponding connection point of the at least one battery module. A technical benefit may include ensuring precise alignment of the connection points between the battery disconnect unit and the battery module, thereby reducing errors during installation and improving the reliability of the electrical connections.

Optionally, in some examples, including in at least one preferred example, the housing comprises at least one opening configured to provide access to the battery disconnect unit when the mounting plate is mounted in the housing. A technical benefit may include enabling access to the battery disconnect unit for servicing or maintenance without the need to remove the mounting plate, reducing the complexity and time required for such operations.

Optionally, in some examples, including in at least one preferred example, the energy storage system comprises a plurality of battery disconnect units, and the housing comprises one opening for each battery disconnect unit. A technical benefit may include allowing individual access to specific battery disconnect units, facilitating independent servicing or replacement without affecting the remaining units or disrupting their operation.

Optionally, in some examples, including in at least one preferred example, the energy storage system further comprises a removable lid arranged to seal the opening. A technical benefit may include providing protection for the battery disconnect unit against environmental factors such as dust or moisture while still allowing access by removing the lid when needed.

Optionally, in some examples, including in at least one preferred example, the mounting opening is located on a top side of the housing as seen when the energy storage system is arranged in a vehicle. A technical benefit may include simplifying the insertion and removal of the mounting plate in environments where access to the top side of the housing is more practical, such as in the confined spaces typically found in vehicles.

Optionally, in some examples, including in at least one preferred example, the housing comprises guiding brackets integrated in the housing, and the mounting plate comprises corresponding edges configured to be guided by the guiding brackets during insertion or removal of the mounting plate. A technical benefit may include enhancing the stability and accuracy of the mounting plate during insertion or removal, reducing the potential for damage to the components or misalignment of the mounting plate within the housing.

Optionally, in some examples, including in at least one preferred example, the housing comprises a stopping element configured to engage with a corresponding stopping portion of the mounting plate to define an intended position of the mounting plate within the housing. A technical benefit may include ensuring the mounting plate is positioned correctly within the housing, thereby facilitating proper alignment of components and maintaining the overall functionality of the energy storage system.

Optionally, in some examples, including in at least one preferred example, the mounting plate comprises a notch configured to abut against the stopping element to prevent further sliding movement of the mounting plate when the mounting plate is in the intended position. A technical benefit may include providing a reliable mechanical interface that ensures the mounting plate is securely held in its intended position, preventing unintended movement during operation or servicing.

Optionally, in some examples, including in at least one preferred example, the guiding brackets are attached to a cross beam of the housing. A technical benefit may include enhancing the structural integrity of the guiding brackets by attaching them to the cross beam, ensuring they remain securely in place during assembly and operation.

Optionally, in some examples, including in at least one preferred example, the guiding brackets are welded to the cross beam of the housing. A technical benefit may include providing a durable and permanent attachment method for the guiding brackets, which reduces the risk of loosening or detachment due to vibrations or other mechanical stresses.

Optionally, in some examples, including in at least one preferred example, the energy storage system further comprises a high voltage output terminal accessible from an outside of the battery housing. A technical benefit may include enabling external access to the high voltage output terminal, which simplifies integration with other systems or devices without the need to open the housing.

Optionally, in some examples, including in at least one preferred example, the mounting plate comprises a connector configured to connect the high voltage output terminal to the mounting plate, wherein the connector is accessible through the mounting opening of the battery housing. A technical benefit may include simplifying the process of establishing electrical and mechanical connections between the high voltage output terminal and the mounting plate, reducing the time and effort required for assembly or maintenance.

Optionally, in some examples, including in at least one preferred example, the high voltage output terminal is configured to be brought in contact with the connector of the mounting plate through a first opening of the battery housing and to be secured to the mounting plate via the mounting opening of the battery housing. A technical benefit may include providing flexibility in accessing and securing the connector, allowing for efficient handling and reducing the risk of installation errors.

Optionally, in some examples, including in at least one preferred example, the output terminal is integrated with a sealing lid configured to seal the first opening. A technical benefit may include protecting the output terminal from external contaminants while ensuring the opening can be sealed effectively to maintain the integrity of the housing.

Optionally, in some examples, including in at least one preferred example, the energy storage system further comprises fastening means configured to secure the mounting plate to the housing. A technical benefit may include ensuring the mounting plate is firmly secured to the housing, improving the mechanical stability and safety of the energy storage system.

Optionally, in some examples, including in at least one preferred example, the fastening means comprises openings in the mounting panel aligned with threaded openings of mounting points of the housing. A technical benefit may include facilitating precise and secure attachment of the mounting plate to the housing, minimizing misalignment and ensuring proper assembly.

Optionally, in some examples, including in at least one preferred example, the mounting points are integrated with guide elements of the housing. A technical benefit may include combining the functions of guiding and securing the mounting plate, which reduces the number of separate components and simplifies the overall assembly process.

Optionally, in some examples, including in at least one preferred example, the fastening means further comprises screws configured to be arranged in the threaded openings of the housing. A technical benefit may include providing a straightforward and reliable method for securing the mounting plate, allowing for easy tightening and adjustment as needed during assembly or servicing.

Optionally, in some examples, including in at least one preferred example, a vehicle comprises an energy storage system as described. A technical benefit may include enabling the use of the energy storage system in vehicle applications, where efficient integration and reliable energy management are essential for performance.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
FIG. 1 is an exemplary battery housing illustrating a mounting plate, battery disconnect units, and a sliding mechanism according to an example.
FIGS. 2A-B are details of exemplary battery housings illustrating guiding brackets and a cross beam according to an example.
FIGS. 3A-B are exemplary illustrations of details of a mounting plate and a battery housing according to an example.
FIGS. 4A-B are exemplary illustrations showing details of a mounting plate and a battery housing according to an example.
FIGS. 5A-C are exemplary illustrations of a high voltage output terminal of an energy storage system, according to an example.
FIG. 6 is a vehicle comprising an energy storage system according to an example.

### DETAILED DESCRIPTION

The detailed description set forth below provides information and examples of the disclosed technology with sufficient detail to enable those skilled in the art to practice the disclosure.

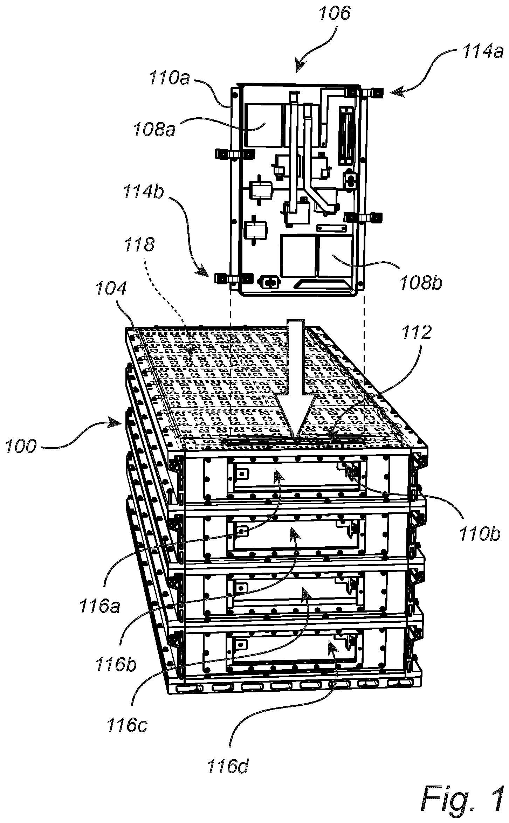

Fig. 1 illustrates an exemplary energy storage system 100, comprising a housing 102 that is configured to accommodate at least one battery module 104. The housing 102 provides a protective enclosure for the battery module 104 and associated components, ensuring mechanical stability and environmental protection during operation.

The energy storage system 100 further includes a mounting plate 106 positioned to support at least one battery disconnect unit 108a-b. Each battery disconnect unit 108a-b is configured to establish an electrical connection with the at least one battery module 104, facilitating the control and management of the battery module's electrical pathways. The mounting plate 106 enables integration of the battery disconnect unit 108a-b into the housing 102 in a modular and organized manner.

The battery disconnect unit 108a-b is configured to control the electrical connection between the battery module 104 and the external circuitry of the energy storage system 100. Its functionality includes enabling or interrupting the flow of electrical current as required for operation, maintenance, or safety purposes. The battery disconnect unit 108a-b may include one or more switches, relays, or circuit breakers to facilitate controlled disconnection under both normal and fault conditions, such as overcurrent, short circuit, or thermal events. Additionally, the battery disconnect unit 108a-b may incorporate diagnostic features, such as voltage and current sensors, to monitor the status of the battery module 104 and provide feedback to a system control unit.

A sliding mechanism 110a-b is also provided, configured to allow the mounting plate 106 to slide into and out of the housing 102 through a mounting opening 112. The sliding mechanism 110a-b facilitates smooth and guided movement of the mounting plate 106 during assembly or servicing, enabling straightforward insertion into the housing 102 or removal therefrom. The mounting opening 112, arranged at a designated location on the housing 102, provides access for the mounting plate 106 to be inserted and positioned within the housing 102.

In the example shown in Fig. 1, the housing 102 is configured to securely retain the mounting plate 106 and its associated battery disconnect units 108a-b in the intended position once the plate is fully inserted. The sliding mechanism 1 10a-b may include structural features such as rails or grooves (not shown in Fig. 1) to guide the mounting plate 106 and ensure alignment during movement into or out of the housing 102. The described arrangement provides for a compact and serviceable design, where the mounting plate 106 and battery disconnect units 108a-b can be easily accessed, maintained, or replaced without requiring disassembly of the housing 102 or other components of the energy storage system 100.

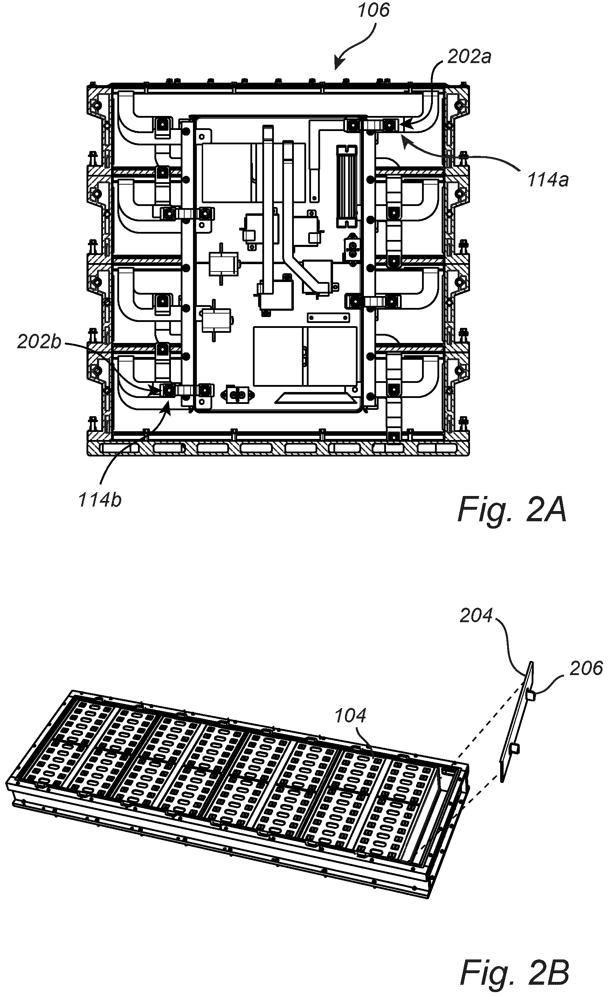

With further reference to Figs. 2A-B illustrating details of the energy storage system 100, the sliding mechanism 110a-b is designed to guide the mounting plate 106 into the housing 102, ensuring that each connection point 114a-b of the battery disconnect units 108a-b is aligned with corresponding connection points 202a-b of the battery module 104. The interaction between the sliding mechanism 110a-b and the mounting plate 106 ensures that the electrical connections are properly seated during assembly or reinstallation.

The housing 102 includes at least one opening 116a-d configured to provide access to the battery disconnect units 108a-b while the mounting plate 106 is mounted within the housing, where the openings 116a-d are positioned to enable inspection, servicing, or disconnection of the battery disconnect units 108a-b without requiring the removal of the mounting plate 106 from the housing 102.

In the example depicted, the energy storage system 100 comprises a plurality of battery disconnect units 108a-b, with the housing 102 including one opening 116a-d corresponding to each battery disconnect unit. The dedicated openings for each battery disconnect unit allow independent access to specific units without disturbing the others, improving modularity and enabling targeted maintenance or replacement. This design ensures that the energy storage system 100 can be serviced efficiently while maintaining the operation of unaffected components.

Referring to Fig. 2B, the guiding bracket 206 is shown attached to a cross beam 204 of the housing 102. The cross beam 204 provides structural reinforcement for the guiding bracket 206, ensuring stable support and alignment for the mounting plate 106 during insertion and removal. By securing the guiding bracket 206 to the cross beam 204, the system achieves a more rigid and reliable guiding structure, reducing the risk of misalignment or shifting of the mounting plate 106 over time.

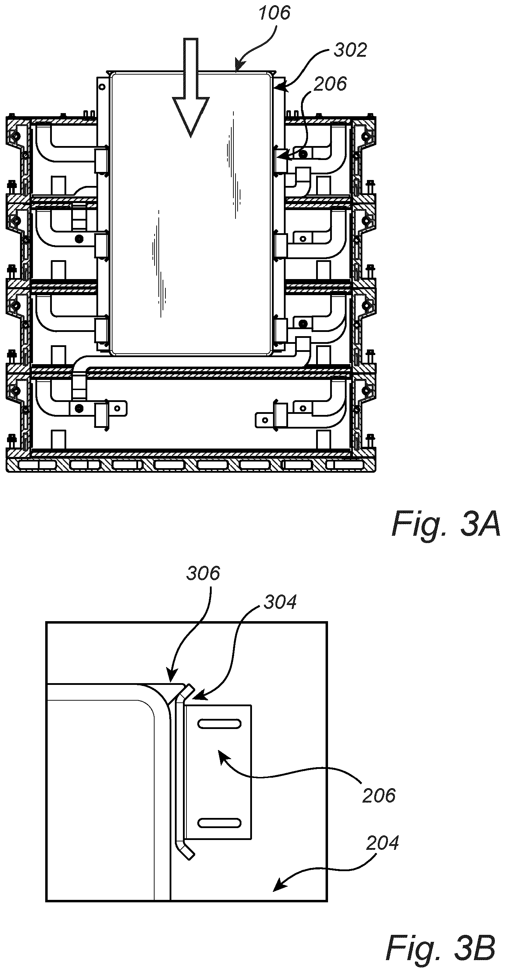

Referring to Figs. 3A-B, details of the mounting plate 106 and the guiding brackets 206 are schematically illustrated. Fig. 3A shows the mounting plate 106 being inserted into the housing 102, while Fig. 3B provides a close-up view of the interaction between the mounting plate 106 and the guiding brackets 206. The guiding brackets 206 are positioned within the housing 102 to provide a defined path for the insertion and removal of the mounting plate 106.

The guiding brackets 206 are configured to engage with corresponding edges 302 formed along the sides of the mounting plate 106. These edges 302 are shaped and positioned to slide within the guiding brackets 206, ensuring that the mounting plate 106 follows a controlled, precise path during insertion and removal. The guiding brackets 206 ensure that the mounting plate 106 is properly aligned with respect to other internal components, such as the battery modules 104 and battery disconnect units 108a-b, as the plate is inserted. Moreover, as illustrated in Fig. 3A, the guiding brackets 206 may form a U-shape towards the mounting plate 106 so that the edges 302 of the mounting plate 108 slide within the opening of the U-shaped bracket 206.

As further illustrated in Fig. 3B, the housing 102 includes a stopping element 304, which is positioned to engage with a corresponding stopping portion of the mounting plate 106. The stopping element 304 defines an intended final position of the mounting plate 106 within the housing 102. This interaction prevents the mounting plate 106 from being inserted beyond its intended position, ensuring that the electrical connections between the battery disconnect units 108a-b and the battery modules 104 are properly aligned.

The stopping portion of the mounting plate 106 may be implemented as a notch 306 formed on the edge of the mounting plate 106, as depicted in Fig. 3B. The notch 306 is configured to abut against the stopping element 304 once the mounting plate 106 has reached its intended position. This design provides a clear mechanical limit that prevents overinsertion of the mounting plate 106, thereby safeguarding the internal components and ensuring proper alignment of the connection points. The combination of the guiding brackets 206, edges 302, stopping element 304, and notch 306 facilitates controlled insertion and ensures that the mounting plate 106 reaches and remains in the intended position.

In some embodiments, the guiding brackets 206 are welded to the cross beam 204. Welding provides a secure and permanent attachment method that prevents loosening or detachment of the guiding brackets 206 over time. This configuration enhances the durability of the system, especially in environments where the energy storage system 100 may be subject to vibrations or repeated assembly and disassembly operations. The welded connection ensures that the guiding brackets 206 maintain precise alignment with the edges 302 of the mounting plate 106, preserving the accuracy and stability of the sliding mechanism.

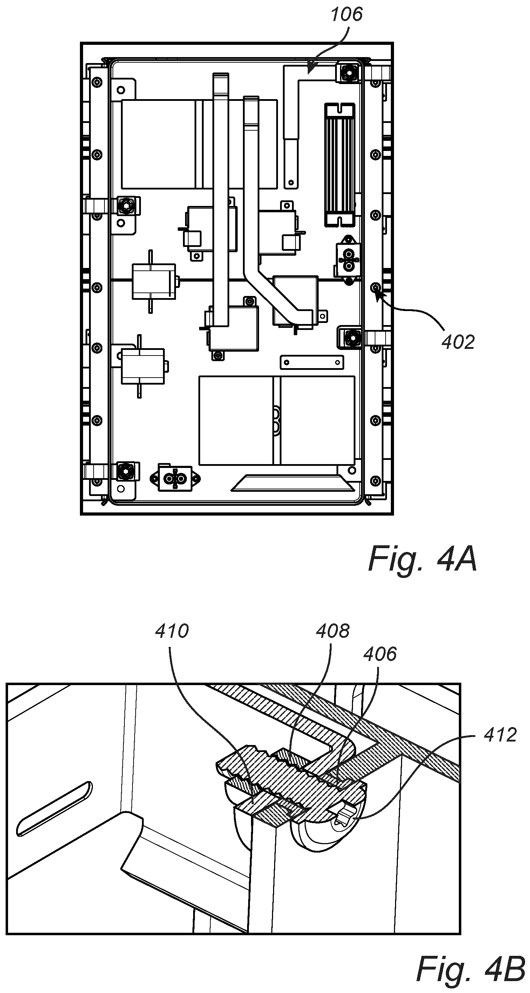

Referring to Figs. 4A-B, details of the mounting plate 106 are schematically illustrated, with a particular focus on the fastening means 402 used to secure the mounting plate 106 to the housing 102. The fastening means 402 is configured to ensure that the mounting plate 106 is firmly fixed within the housing 102 once it has been inserted into its intended position. This secure attachment prevents unintended movement of the mounting plate 106 during operation, transport, or servicing of the energy storage system 100.

As illustrated in Figs. 4B, the fastening means 402 includes a set of openings 406 provided in the mounting plate 106. These openings 406 are arranged to align with corresponding threaded openings 408 of mounting points 410 located on the housing 102. The alignment of the openings 406 in the mounting plate 106 with the threaded openings 408 of the mounting points 410 enables the straightforward insertion of fasteners, such as screws or bolts, to secure the mounting plate 106 to the housing 102. This arrangement facilitates precise and repeatable attachment, ensuring that the mounting plate 106 is firmly held in place once installed.

The mounting points 410 of the housing 102 are integrated with guide elements of the housing. The integration of the mounting points 410 with the guide elements provides dual functionality, as the same structures that guide the mounting plate 106 during insertion also serve as points of attachment. This integration reduces the number of individual components within the housing 102, thereby simplifying manufacturing and assembly. The combined function of guiding and fastening increases assembly efficiency while maintaining alignment of the mounting plate 106.

As further illustrated in Fig. 4B, the fastening means 402 includes screws 412, which are configured to be arranged in the threaded openings 408 of the mounting points 410. The screws 412 are inserted through the openings 406 in the mounting plate 106 and engage with the threaded openings 408 of the mounting points 410. This arrangement allows for a secure, releasable attachment of the mounting plate 106, enabling it to be easily installed or removed when necessary. The use of screws 412 provides a robust yet reversible attachment method, allowing for servicing, inspection, or replacement of the mounting plate 106 or its associated components

By incorporating fastening means 402 that utilize openings 406, threaded openings 408, mounting points 410, and screws 412, the energy storage system 100 ensures that the mounting plate 106 is securely fixed within the housing 102. This secure attachment improves system robustness and mechanical stability, especially in applications where vibrations or mechanical shocks may occur, such as in automotive or transport environments.

It would also be possible to employ alternative fastening means to secure the mounting plate 106 to the housing 102, offering flexibility in design and manufacturing. Instead of using screws 412 and threaded openings 408, the fastening means may include spring-loaded locking pins or quick-release latches. Spring-loaded locking pins could be configured to engage automatically as the mounting plate 106 reaches its intended position, providing a tool-free attachment method that simplifies assembly and removal. Alternatively, quick-release latches may be mounted on the housing 102 or integrated into the mounting plate 106, allowing for manual engagement or disengagement of the mounting plate 106 without the need for separate fasteners. In some embodiments, clip-on mechanisms or snapfit connectors may be used, where the mounting plate 106 is pressed into position and retained by resilient locking tabs that engage with corresponding recesses in the housing 102. Adhesive bonding or welding may be considered in scenarios where permanent attachment is required, though these methods may limit reusability. Each of these alternative fastening means can be selected based on the desired balance between ease of assembly, disassembly, structural robustness, and reusability.

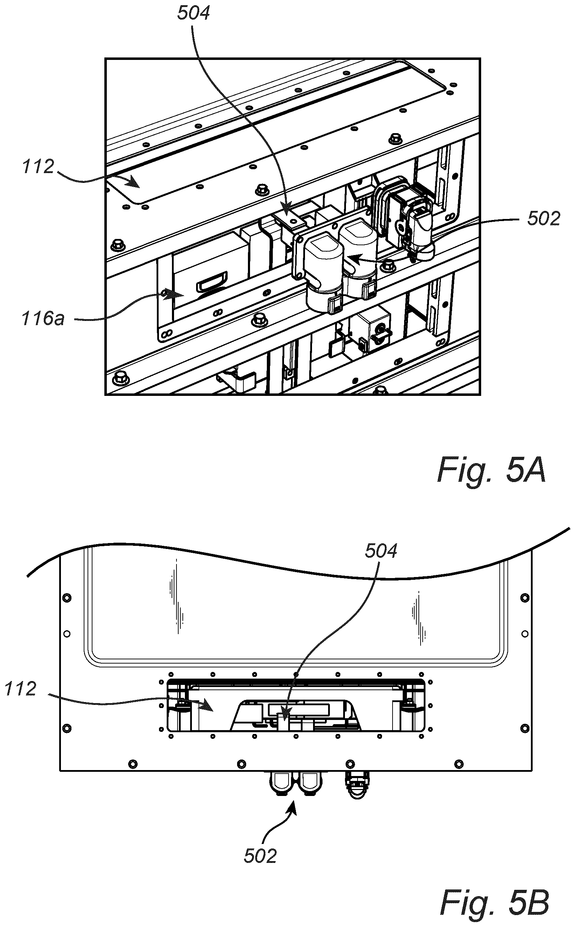

Referring to Figs. 5A-C, details of a high voltage output terminal 502 of the energy storage system 100 are schematically illustrated. The high voltage output terminal 502 provides an interface for connecting the internal electrical components of the energy storage system 100 to external systems, such as power distribution networks, vehicle powertrains, or energy management systems. The high voltage output terminal 502 is accessible from outside the housing 102, allowing for straightforward connection to external devices without the need to open or disassemble the housing 102.

As illustrated in Figs. 5A-B, the mounting plate 106 includes a connector 504 configured to mechanically and electrically connect the output terminal 502 to the mounting plate 106. The connector 504 may be preinstalled on the mounting plate 106 and is accessible through the mounting opening 112 of the housing 102, enabling easy access during the assembly or servicing of the system. By positioning the connector 504 to be accessible through the mounting opening 112, the design facilitates quick and efficient connection of the high voltage output terminal 502 to the mounting plate 106, minimizing assembly complexity and also allowing for maintenance or replacement of the connector 504 if necessary.

Fig. 5A illustrates an embodiment in which the high voltage output terminal 502 is configured to be brought into contact with the connector 504 of the mounting plate 106 through a first opening 116a of the battery housing 102. The first opening 116a provides an access point for the high voltage output terminal 502 to engage with the connector 504 of the mounting plate 106, allowing for a secure electrical connection. Once the high voltage output terminal 502 is in place, it can be secured to the mounting plate 106 via the mounting opening 112 of the housing 102. This dual-access design offers flexibility for assembly and maintenance, allowing for connection from one access point (first opening 116a) while securing the high voltage output terminal 502 from a second access point (mounting opening 112).

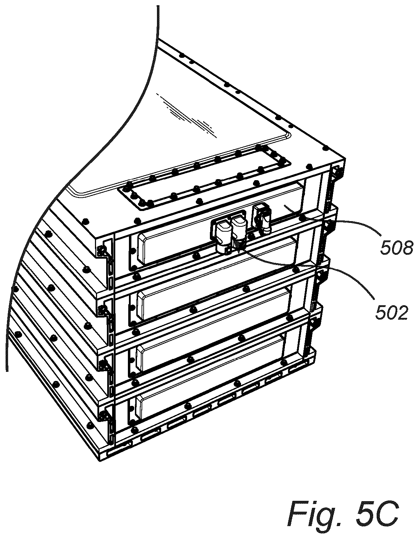

As further illustrated in Fig. 5C, the high voltage output terminal 502 may be integrated with a sealing lid 508, which is configured to seal the first opening 116a. The sealing lid 508 serves to protect the internal components of the energy storage system 100 from environmental factors such as dust, moisture, and debris. The sealing lid 508 may be designed to be removable, allowing access to the first opening 116a when needed for servicing or inspection. By sealing the first opening 116a, the sealing lid 508 contributes to the overall protection and durability of the energy storage system 100, ensuring reliable operation even in harsh environmental conditions.

The combined functionality of the high voltage output terminal 502, connector 504, first opening 116a, and sealing lid 508 provides a robust and serviceable solution for interfacing with external electrical systems. This design allows for easy assembly, secure electrical connections, and environmental protection, all of which contribute to the efficiency, safety, and longevity of the energy storage system 100.

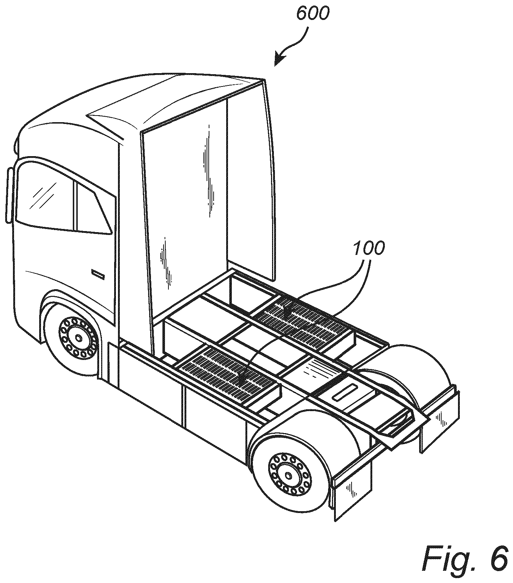

Fig. 6 schematically illustrates a vehicle 600 comprising an energy storage system 100 according to any one of the preceding examples.

Example 1. An energy storage system (100) comprising: a housing (102) configured to accommodate at least one battery module (104); a mounting plate (106) including at least one battery disconnect unit (108a-b) configured to be connected to the at least one battery module; and a sliding mechanism (110a-b) configured to allow the mounting plate to slide into and out of the housing through a mounting opening (112) arranged to receive the mounting plate.

Example 2. The energy storage system according to example 1, wherein the sliding mechanism is configured to guide the mounting plate into the housing so that a connection point (114a-b) of the at least one battery disconnect unit is aligned with a corresponding connection point (202a-b) of the at least one battery module.

Example 3. The energy storage system according to example 1 or 2, wherein the housing comprises at least one opening (116a-d) configured to provide access to the battery disconnect unit when the mounting plate is mounted in the housing.

Example 4. The energy storage system according to example 3, wherein the energy storage system comprises a plurality of battery disconnect units (108a-b) and wherein the housing comprises one opening for each battery disconnect unit.

Example 5. The energy storage system according to example 3 or 4, further comprising a removable lid arranged to seal the opening.

Example 6. The energy storage system according to any one of the preceding examples, wherein the mounting opening is located on a top side (118) of the housing as seen when the energy storage system is arranged in a vehicle.

Example 7. The energy storage system according to any one of the preceding examples, wherein the housing comprises guiding brackets (206) integrated in the housing and the mounting plate comprises corresponding edges (302) configured to be guided by the guiding brackets during insertion or removal of the mounting plate.

Example 8. The energy storage system according to any one of the preceding examples, wherein the housing comprises a stopping element (304) configured to engage with a corresponding stopping portion of the mounting plate to define an intended position of the mounting plate within the housing.

Example 9. The energy storage system according to example 8, wherein the mounting plate comprises a notch (306) configured to abut against the stopping element to prevent further sliding movement of the mounting plate when the mounting plate is in the intended position.

Example 10. The energy storage system according to example 7, wherein the guiding brackets are attached to a cross beam (204) of the housing.

Example 11. The energy storage system according to example 10, wherein the guiding brackets are welded to the cross beam of the housing.

Example 12. The energy storage system according to any one of the preceding examples, further comprising a high voltage output terminal (502) accessible from an outside of the battery housing.

Example 13. The energy storage system according to example 12, wherein the mounting plate comprises a connector (504) configured to connect the high voltage output terminal to the mounting plate, wherein the connector is accessible through the mounting opening of the battery housing.

Example 14. The energy storage system according to example 13, wherein the connector is configured to be brought in contact with the mounting plate through a first opening (116a) of the battery housing, and to be secured to the mounting plate via the mounting opening (112) of the battery housing.

Example 15. The energy storage system according to example 14, wherein the output terminal (502) is integrated with a sealing lid (508) configured to seal the first opening.

Example 16. The energy storage system according to any one of the preceding examples, further comprising fastening means (402) configured to secure the mounting plate to the housing.

Example 17. The energy storage system according to example 16, wherein the fastening means comprises openings (406) in the mounting panel aligned with threaded openings (408) of mounting points (410) of the housing.

Example 18. The energy storage system according to example 17, wherein the mounting points are integrated with guide elements of the housing.

Example 19. The energy storage system according to example 17 or 18, wherein the fastening means further comprises screws (412) configured to be arranged in the threaded openings of the housing.

Example 20. A vehicle (600) comprising an energy storage system (100) according to any one of the preceding examples.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. An energy storage system (100) comprising:
a housing (102) configured to accommodate at least one battery module (104);
a mounting plate (106) including at least one battery disconnect unit (108a-b) configured to be connected to the at least one battery module; and
a sliding mechanism (110a-b) configured to allow the mounting plate to slide into and out of the housing through a mounting opening (112) arranged to receive the mounting plate.

2. The energy storage system according to claim 1, wherein the sliding mechanism is configured to guide the mounting plate into the housing so that a connection point (114a-b) of the at least one battery disconnect unit is aligned with a corresponding connection point (202a-b) of the at least one battery module.

3. The energy storage system according to claim 1 or 2, wherein the housing comprises at least one opening (116a-d) configured to provide access to the battery disconnect unit when the mounting plate is mounted in the housing.

4. The energy storage system according to claim 3, wherein the energy storage system comprises a plurality of battery disconnect units (108a-b) and wherein the housing comprises one opening for each battery disconnect unit.

5. The energy storage system according to claim 3 or 4, further comprising a removable lid arranged to seal the opening.

6. The energy storage system according to any one of the preceding claims, wherein the mounting opening is located on a top side (118) of the housing as seen when the energy storage system is arranged in a vehicle.

7. The energy storage system according to any one of the preceding claims, wherein the housing comprises guiding brackets (206) integrated in the housing and the mounting plate comprises corresponding edges (302) configured to be guided by the guiding brackets during insertion or removal of the mounting plate.

8. The energy storage system according to any one of the preceding claims, wherein the housing comprises a stopping element (304) configured to engage with a corresponding stopping portion of the mounting plate to define an intended position of the mounting plate within the housing.

9. The energy storage system according to claim 8, wherein the mounting plate comprises a notch (306) configured to abut against the stopping element to prevent further sliding movement of the mounting plate when the mounting plate is in the intended position.

10. The energy storage system according to claim 7, wherein the guiding brackets are attached to a cross beam (204) of the housing.

11. The energy storage system according to any one of the preceding claims, further comprising a high voltage output terminal (502) accessible from an outside of the battery housing.

12. The energy storage system according to claim 11, wherein the mounting plate comprises a connector (504) configured to connect the high voltage output terminal to the mounting plate, wherein the connector is accessible through the mounting opening of the battery housing.

13. The energy storage system according to claim 12, wherein the connector is configured to be brought in contact with the mounting plate through a first opening (116a) of the battery housing, and to be secured to the mounting plate via the mounting opening (112) of the battery housing.

14. The energy storage system according to claim 13, wherein the output terminal (502) is integrated with a sealing lid (508) configured to seal the first opening.

15. A vehicle (600) comprising an energy storage system (100) according to any one of the preceding claims.
